# EUROPÄISCHE PATENTSCHRIFT

(11) **EP 3 912 761 B1**
(45) Veröffentlichungstag und Bekanntmachung des Hinweises auf die Patenterteilung: **01.05.2024**
(21) Anmeldenummer: 21168505.2
(22) Anmeldetag: 15.04.2021
(51) Int. Cl.: B25B 23/00

(54) **BITHALTER MIT STOSSLASTSCHUTZEINRICHTUNG**
BIT HOLDER WITH BUMPER
PORTE-MÈCHE POURVU DE DISPOSITIF DE PROTECTION CONTRE LES IMPULSIONS DE CHARGE

(30) Priorität: 20.05.2020 DE 102020113683
(43) Veröffentlichungstag der Anmeldung: 24.11.2021
(73) Patentinhaber: Adolf Würth GmbH & Co. KG, 74653 Künzelsau (DE); Würth International AG, 7000 Chur (CH)
(72) Erfinder: Cera, Udo, 74523 Schwäbisch Hall (DE)
(74) Vertreter: Dilg, Haeusler, Schindelmann Patentanwaltsgesellschaft mbH

(56) Entgegenhaltungen:
- WO-A2-2005/060551
- US-A- 4 209 182
- US-A1- 2003 098 169

## Beschreibung

Die Erfindung betrifft einen Bithalter zum Halten eines Bits zum Kuppeln des Bits mit an einem Antriebswerkzeug, eine Anordnung zum Einbringen eines Befestigungselements in einen Verankerungsgrund und ein Verfahren zum Einbringen eines Befestigungselements in einen Verankerungsgrund.

Die Verwendung von Bits hat den Vorteil, dass mit einem einzigen Werkzeug eine große Bandbreite an Schrauben-Antrieben in verschiedenen Größen eingesetzt werden kann. Bithalter zwischen einem Bit und einem Antriebswerkzeug erleichtern den Bitwechsel und dienen auch als Adapter, sodass zum Beispiel eine Bohrmaschine zum Schrauben eingesetzt werden kann. Ferner ermöglicht ein Bithalter auch eine effektive Verlängerung des Bits. Dies hat Vorteile, zum Beispiel wenn Schrauben bündig oder an verwinkelten Stellen gesetzt werden sollen.

Antriebswerkzeuge wie Akkuschrauber, Akku-Bohrschrauber, Bohrmaschinen, Schlagschrauber und Hammerbohrer haben häufig ein Schnellspannbohrfutter oder eine magnetische Innensechskant-Aufnahme, die mit vielen Bits für verschiedene Schrauben-Antriebe kompatibel sind. Bithalter können die Arbeiten zusätzlich erleichtern. Insbesondere bei einem Innensechskant, der häufig an Akkuschraubern zu finden ist, kann es passieren, dass der Bit beim Arbeiten aus der Aufnahme fällt. Ein Bithalter sichert den Bit und ermöglicht weiterhin schnelle einhändige Bitwechsel. Bithalter ermöglichen zum Beispiel ein Bohren und Schrauben ohne Werkzeugwechsel.

Ein Bithalter nach dem Oberbegriff von Anspruch 1 ist in der WO 2005/060551 A2 gezeigt.

Nachteilig ist, dass Bits bzw. Bithalter versagen können, wenn Schrauben mit dem Kopf tief in Holz versenkt werden. Dadurch kann der Bithalter bzw. das Bit beim Auftreffen im Holz einen Schlag erhalten, und die Mechanik kann beschädigt werden.

Es ist eine Aufgabe der vorliegenden Erfindung, einen robusten Bithalter bereitzustellen, der gemeinsam mit einem Bit auch unter rauen Bedingungen betriebssicher einsetzbar ist.

Diese Aufgabe wird durch die Gegenstände mit den Merkmalen gemäß den unabhängigen Patentansprüchen gelöst. Weitere Ausführungsbeispiele sind in den abhängigen Ansprüchen gezeigt.

Gemäß einem Ausführungsbeispiel der vorliegenden Erfindung ist ein Bithalter zum Halten eines Bits zum Kuppeln des Bits mit einem Antriebswerkzeug geschaffen, wobei der Bithalter eine Aufnahmeeinrichtung, die zum Aufnehmen des Bits ausgebildet ist, eine Werkzeugkupplung, die zum Kuppeln mit dem Antriebswerkzeug ausgebildet ist, und eine Stoßlastschutzeinrichtung aufweist, die zum Schützen vor einer auf den Bithalter (insbesondere auf eine Fixierhülse des Bithalters) einwirkenden Stoßlast beim Anstoßen des Bithalters an einen Verankerungsgrund ausgebildet ist, wenn ein mittels des Bits, des Antriebswerkzeugs und des Bithalters anzutreibendes Befestigungselement in den Verankerungsgrund eingebracht wird.

Gemäß einem weiteren Ausführungsbeispiel der vorliegenden Erfindung ist eine Anordnung zum Einbringen eines Befestigungselements in einen Verankerungsgrund bereitgestellt, wobei die Anordnung einen Bithalter mit den oben beschriebenen Merkmalen zum Halten eines Bits und zum Kuppeln des Bits mit an einem Antriebswerkzeug und das Bit aufweist, das an der Aufnahmeeinrichtung des Bithalters aufgenommen oder aufnehmbar ist.

Gemäß noch einem anderen Ausführungsbeispiel der vorliegenden Erfindung ist ein Verfahren zum Einbringen eines Befestigungselements in einen Verankerungsgrund mittels eines Bits und eines Antriebswerkzeugs bereitgestellt, wobei das Verfahren ein Aufnehmen des Bits an einer Aufnahmeeinrichtung eines Bithalters, ein Kuppeln einer Werkzeugkupplung des Bithalters mit dem Antriebswerkzeug, ein Einbringen des Befestigungselements in den Verankerungsgrund durch Aufbringen einer auf das Befestigungselement einwirkenden Einbringkraft mittels des Bits, des Antriebswerkzeugs und des Bithalters, und ein Versehen des Bithalters mit einer Stoßlastschutzeinrichtung zum Schützen vor einer auf den Bithalter (insbesondere auf eine Fixierhülse des Bithalters) einwirkenden Stoßlast beim Anstoßen des Bithalters an den Verankerungsgrund bei dem Einbringen aufweist.

Im Rahmen der vorliegenden Anmeldung kann unter einem "Bit" insbesondere ein auswechselbares Antriebselement (beispielsweise eine Schraubendreherklinge) ohne Griff für ein bestimmtes Profil eines Befestigungselements (beispielsweise ein Schraubenkopfprofil) verstanden werden. Beispiele für Bit-Profile sind ein Schlitz-Profil, ein Kreuzschlitz-Profil, ein Sechskant-Profil, ein Torx-Profil und ein AW-Profil. Ein beispielsweise sechseckiges Aufnahmeende eines Bits kann so geformt sein, dass man das Bit in einen entsprechend geformten Bithalter einsetzen.

Im Rahmen der vorliegenden Anmeldung kann unter einem "Bithalter" insbesondere ein Adapter in einem Strang Antriebswerkzeug-Bithalter-Bit verstanden werden, der an einer Seite eine Kupplung mit einem Bit und an einer gegenüberliegenden anderen Seite eine Kupplung mit einem Antriebswerkzeug ermöglicht. Ein Bithalter kann ein bezogen auf ein Antriebswerkzeug separates Teil sein oder kann als fester Teil des Antriebswerkzeugs (zum Beispiel ein Handgriff oder ein Akkuschrauber) ausgebildet bzw. montiert sein.

Im Rahmen der vorliegenden Anmeldung kann unter einem "Antriebswerkzeug" insbesondere eine Vorrichtung verstanden werden, mit der eine Antriebskraft aufgebracht werden kann, die mittels eines Bithalters auf ein Bit übertragen werden kann. Die Antriebskraft kann insbesondere eine drehende oder rotatorische Antriebskraft sein, optional überlagert mit einer translatorischen Antriebskraft. Anders ausgedrückt kann das Antriebswerkzeug zum Drehantreiben des Bithalters und des Bits und somit eines Befestigungselements ausgebildet sein, dessen Antrieb mit dem Bit drehfest gekoppelt ist. Die Antriebskraft kann alternativ aber auch eine rein translatorische Antriebskraft sein. Eine Antriebskraft eines Antriebswerkzeugs kann eine pneumatische, eine hydraulische oder eine elektrische Antriebskraft sein, die beispielsweise von einer Pneumatikeinrichtung, einer Hydraulikeinrichtung oder einem Elektromotor erzeugt wird, oder kann eine Muskelkraft eines Benutzers sein. Beispiele für Antriebswerkzeuge sind ein Akkuschrauber, ein Akku-Bohrschrauber, ein Drehschrauber, ein Impulsschrauber, ein Ratschenschrauber, eine Bohrmaschine, ein Schlagschrauber und ein Hammerbohrer. Auch ein von einem Benutzer drehbarer Handgriff mit einer mit einem Bithalter kuppelbaren Kupplung kann als Antriebswerkzeug eingesetzt werden. Weitere Beispiele für ein Antriebswerkzeug sind ein Schraubendrehergriff, ein abgewinkelter Griff, eine Ratsche oder ein Drehmomentschlüssel.

Im Rahmen der vorliegenden Anmeldung kann unter einem "Befestigungselement" insbesondere ein Körper verstanden werden, der mittels des in dem Bithalter angeordneten und mittels des Antriebswerkzeugs angetriebenen Bits in einen Verankerungsgrund eingebracht werden kann, insbesondere drehend. Vorzugsweise ist das Befestigungselement eine Schraube, besonders bevorzugt eine Holzschraube zum Einbringen in einen Verankerungsgrund aus Holz. Alternativ kann das Befestigungselement aber auch beispielsweise ein Nagel oder ein Niet sein. Das Befestigungselement kann ausgebildet sein, vorbohrungsfrei oder nach Ausbilden einer Vorbohrung in den Verankerungsgrund eingebracht werden zu können. Ein drehend eingebrachtes Befestigungselement kann ein selbstschneidendes oder selbstfurchendes Außengewinde aufweisen.

Im Rahmen der vorliegenden Anmeldung kann unter dem Begriff "Verankerungsgrund" insbesondere ein zum Verankern des Befestigungselements geeigneter Untergrund verstanden werden. Ein solcher Verankerungsgrund kann insbesondere eine Wand, weiter insbesondere eine vertikale Wand, sein oder aufweisen. Materialien für einen solchen Verankerungsgrund sind insbesondere Holz oder Holzbaustoffe, oder aber auch Beton- und Mauerwerksbaustoffe, Metall oder Kunststoffbauteile. Ferner kann ein solcher Verankerungsgrund auch ein beliebiger Kompositwerkstoff aus mehreren unterschiedlichen Materialkomponenten sein. Der Verankerungsgrund kann Hohlräume aufweisen oder kann massiv (d.h. von Hohlräumen frei) sein.

Im Rahmen der vorliegenden Anmeldung kann unter einem "Stoßlastschutzeinrichtung" insbesondere mindestens ein Körper oder ein Mechanismus verstanden werden, der eine auf die Fixierhülse des Bithalters einwirkende Stoßbelastung beim Einbringen des Befestigungselements in den Verankerungsgrund und beim Anstoßen des Bithalters an eine (insbesondere ebene) Außenfläche des Verankerungsgrunds aufnimmt, abschirmt, reduziert, abmildert, dämpft und/oder auffängt. Anders ausgedrückt wirkt mit Stoßlastschutzeinrichtung eine geringere Stoßlast auf den restlichen Bithalter als ohne Stoßlastschutzeinrichtung. Beispielsweise kann die Stoßlastschutzeinrichtung als Scheibe, Zylinder oder Kugel ausgebildet sein, die zumindest einen Abschnitt des Bithalters vor einem Stoß schützen. Es ist aber auch möglich, die Stoßlastschutzeinrichtung als elektronischen Mechanismus auszubilden, der mittels eines Messfühlers oder dergleichen eine elektronische Messung eines Stoßes durchführt und an ein elektrisches Antriebswerkzeug eine Rückkopplung sendet, mit der ein (Dreh-)Antrieb das Antriebswerkzeugs und daher des Bithalters gestoppt wird, um zumindest einen Teil des Bithalters vor einer Stoßeinwirkung zu schützen. Beispielsweise kann die Stoßlastschutzeinrichtung auch eine Feder (beispielsweise ausgebildet als Federkranz) oder ein anderes Vorspannelement implementieren, die bzw. das einen Aufprall des Bithalters auf den Verankerungsgrund dämpft. Mögliche Materialien der Stoßlastschutzeinrichtung sind Metalle (beispielsweise Stahl), Kunststoff (insbesondere Hartkunststoff), Gummi (insbesondere Hartgummi) und/oder Glasfasermaterial bzw. glasfaserverstärktes Material.

Gemäß der vorliegenden Erfindung ist ein stoßgeschützter Bithalter geschaffen, der selbst bei Anstoßen des Bithalters an einen Verankerungsgrund beim Setzen eines Befestigungselements vor einer Überlast und daher einer Beschädigung des Bithalters geschützt ist. Insbesondere kann ein stabiler (und vorzugsweise nichtmagnetisch ausbildbarer) mechanischer Bithalter bereitgestellt werden, der in besonderer Weise bei einer Verwendung im Holzbau vorteilhaft ist. Besonders im Holzbau kann es vorkommen, dass ein Befestigungselement tief in einen Verankerungsgrund aus Holz gesetzt wird (zum Beispiel so, dass ein Kopf des Befestigungselements sich im Inneren des Verankerungsgrunds befindet) und dabei der Bithalter gegen eine Außenfläche des Verankerungsgrunds stößt. Wenn beispielsweise das Befestigungselement eine Schraube ist, kann aufgrund des Vorschubs der Schraube in den Verankerungsgrund hinein die auf den Bithalter einwirkende Stoßkraft beim Aufprall auf den Verankerungsgrund erheblich sein. Indem gemäß der Erfindung ein solcher Bithalter mit einer Stoßlastschutzeinrichtung ausgerüstet ist, ist eine übermäßige Druckbelastung insbesondere auf eine Fixier- bzw. Arretierhülse des Bithalters während eines Einschraubvorganges zuverlässig vermieden. Dies unterbindet eine Zerstörung der Arretierung und somit des Bithalters als Ganzes. Gemäß der Erfindung ist somit ein wirksamer Stoßschutz für eine Fixierhülse eines Bithalters geschaffen, der eine hohe Betriebssicherheit selbst unter robusten Bedingungen ermöglicht. Insbesondere kann gemäß Ausführungsbeispielen der Erfindung vermieden werden, dass ein Bit-Futter ungebremst und ungeschützt an ein Bohrloch oder einen sonstigen Verankerungsgrund anschlägt.

Im Weiteren werden zusätzliche exemplarische Ausführungsbeispiele des Bithalters, der Anordnung und des Verfahrens beschrieben.

Gemäß einem exemplarischen Ausführungsbeispiel kann die Stoßlastschutzeinrichtung eine dem Verankerungsgrund zugewandte Schrägfläche aufweisen, insbesondere ausgebildet als ringförmige Schrägfläche. Es hat sich herausgestellt, dass eine solche Schrägfläche mit einem Neigungswinkel gegenüber einer (insbesondere ebenen) Außenfläche des Verankerungsgrunds einem Benutzer eine ausreichend frühzeitige haptische Rückmeldung gibt, dass die Außenseite des Verankerungsgrunds erreicht ist. Ein Benutzer kann daher mit einer gewissen Vorwarnzeit die (Dreh-)Betätigung mittels des Antriebswerkzeugs beenden, ohne dass der Bithalter beschädigt wird. Auch kann die Schrägfläche als Dämpfungsmaßnahme zum Dämpfen des Aufpralls des Bithalters auf den Verankerungsgrund dienen, wenn das Befestigungselement ins Innere des Verankerungsgrunds vordringt. Anschaulich verhindert eine solche Schrägfläche einen ungehemmten Frontalaufprall zweier paralleler Flächen und fördert auch eine Reibkraft zwischen Verankerungsgrund und Schrägfläche, wenn der Bithalter beim Setzen des Befestigungselements dreht. Anschaulich kann die Schrägfläche sich in Richtung Verankerungsgrund verjüngend (insbesondere konisch zulaufend) gebildet sein.

Gemäß einem exemplarischen Ausführungsbeispiel kann die Stoßlastschutzeinrichtung eine gegenüber der Schrägfläche in einer Einbringrichtung vorderseitig angeordnete und senkrecht zu der Einbringrichtung orientierte Stirnfläche aufweisen. Somit kann die Stoßlastschutzeinrichtung eine parallel zu dem Verankerungsgrund orientierte Stirnfläche zwischen der Schrägfläche und dem Verankerungsgrund aufweisen, insbesondere ausgebildet als ringförmige Stirnfläche. Eine solche vorzugsweise ringförmige Stirnfläche kann mit Vorteil als Verkippschutz dienen, der ein unerwünschtes Verkippen des Bithalters beim Erreichen des Verankerungsgrunds hemmen kann.

Gemäß einem exemplarischen Ausführungsbeispiel kann die ringförmige Stirnfläche der Stoßlastschutzeinrichtung ein axiales Ende des Bithalters bilden. In diesem Fall kann ein Endabschnitt einer Bithülse des Bithalters beispielsweise in einem Innenlumen der Stoßlastschutzeinrichtung untergebracht sein, sodass einzig die hierfür speziell konfigurierte Stoßlastschutzeinrichtung in Kontakt mit dem Verankerungsgrund gerät und die Bithülse daher vor einer Beschädigung beim Setzen des Befestigungselements geschützt ist.

Alternativ kann eine Bithülse gegenüber der ringförmigen Stirnfläche der Stoßlastschutzeinrichtung geringfügig in axialer Richtung hervorstehen, um dadurch einen hohlzylindrischen Ringstutzen zu bilden, der an einer Stufe in die ringförmige Stirnfläche übergeht. Ein solcher Ringstutzen äußerst kurzer Dimension kann mit Vorteil zum vorderseitigen Verschweißen der Stoßlastschutzeinrichtung mit der Bithülse verwendet werden.

Gemäß einem exemplarischen Ausführungsbeispiel kann die Stoßlastschutzeinrichtung einen dem Verankerungsgrund zugewandten kegelstumpfförmigen Ringkörperabschnitt aufweisen. Ein hohler Kegelstumpf mit ausreichend großem Öffnungswinkel hat sich als besonders geeignete Lösung für die Stoßlastschutzeinrichtung herausgestellt, da hiermit sowohl eine stoßdämpfende und die Bithülse des Bithalters schützende Wirkung als auch ein Kippschutz mit räumlicher Führungsfunktion bereitgestellt werden kann. Ferner gibt eine solche Schrägfläche einem Benutzer eine spürbare Rückmeldung, dass die Außenseite des Verankerungsgrunds erreicht ist, sodass ein Benutzer eine Antriebskraft rechtzeitig drosseln kann.

Gemäß einem exemplarischen Ausführungsbeispiel kann ein spitzer Winkel zwischen der Schrägfläche und einer Zentralachse des Bithalters von einem rechten Winkel um höchstens 30° abweichen, insbesondere um höchstens 20° abweichen, weiter insbesondere um höchstens 10° abweichen, aber vorzugsweise um mindestens 5° abweichen. Wird der Winkel zu groß, kommt es zu einem annähernd frontalen Aufprall der Stoßlastschutzeinrichtung auf den Verankerungsgrund und somit zu einem verminderten Stoßschutz. Wird dieser Winkel zu klein, kann dies zu einer gewissen Kippanfälligkeit führen.

Gemäß einem exemplarischen Ausführungsbeispiel kann die Stoßlastschutzeinrichtung an dem Bithalter auswechselbar angebracht sein, insbesondere auf- und abschraubbar angebracht sein. Die Stoßlastschutzeinrichtung ist bestimmungsgemäß jene Komponente des Bithalters, auf die beim Auftreffen auf den Verankerungsgrund die höchste mechanische Last einwirkt. Daher kann die Stoßlastschutzeinrichtung im Dauerbetrieb einem gewissen Verschleiß ausgesetzt ein. Wenn die Stoßlastschutzeinrichtung vom Rest des Bithalters abnehmbar ausgebildet ist, kann nach Verschleiß der Stoßlastschutzeinrichtung diese vom Bithalter abgenommen und ausgetauscht werden. Der Rest des Bithalters kann weiterverwendet werden. Besonders vorteilhaft ist das Ausbilden einer reversiblen Schraubverbindung zwischen der Stoßlastschutzeinrichtung und der Bithülse, da dies ein einfaches und intuitives Auswechseln der Stoßlastschutzeinrichtung ermöglicht, ohne dass die Stabilität der Verbindung zwischen Bithülse und Stoßlastschutzeinrichtung und somit die Funktionalität der Stoßlastschutzeinrichtung beeinträchtigt wird. Ein selektives Auswechseln der verschlissenen Stoßlastschutzeinrichtung führt auch einer ressourcensparenden Verwendung.

Gemäß einem exemplarischen Ausführungsbeispiel kann die Stoßlastschutzeinrichtung sich im an der Aufnahmeeinrichtung aufgenommenen Zustand des Bits umfänglich geschlossen um den Bit herum erstrecken. Auf diese Weise kann der Stoßlastschutz in vollumfänglicher Weise sichergestellt werden und unabhängig von einer Umfangsposition des Bithalters, an der ein Kontakt mit dem Verankerungsgrund erfolgt.

Gemäß einem exemplarischen Ausführungsbeispiel kann die Stoßlastschutzeinrichtung aus einem im Wesentlichen nicht-magnetischen Material (insbesondere aus einem nicht-permanentmagnetischen bzw. aus einem nicht-dauermagnetischen Material) hergestellt sein, zum Beispiel aus einem diamagnetischen oder paramagnetischen Material. Beispielsweise kann die Stoßlastschutzeinrichtung aus nicht-magnetischem Edelstahl hergestellt werden. Somit kann ein unmagnetischer Bithalter bereitgestellt sein, der sich insbesondere für ein Schrauben in metallischer Umgebung besonders gut eignet. Eine von einem dauermagnetischen Bithalter ausgeübte Magnetkraft könnte in einem solchen Szenario beispielsweise metallische Späne anziehen, was die Zuverlässigkeit einer ausgebildeten Setzverbindung beeinträchtigen könnte. Dies kann darauf zurückzuführen sein, dass Metallspäne die Passgenauigkeit zwischen einem Antrieb des Befestigungselements und einer Antriebsspitze des Bits verringern können.

Für Anwendungsfälle, in denen mit Problemen in Hinblick auf Metallspäne und dergleichen nicht zu rechnen ist, kann die Stoßlastschutzeinrichtung und/oder können andere Komponenten des Bithalters alternativ auch aus einem magnetischen Material (insbesondere aus einem permanentmagnetischen Material) hergestellt sein.

Gemäß der Erfindung weist der Bithalter eine Fixierhülse zum (insbesondere selektiven) Fixieren des Bits an der Aufnahmeeinrichtung auf.

Ein entsprechendes Schnellwechselfutter mit Fixierhülse kann eine feste Verbindung zwischen Bithalter und Bit ausbilden. Beispielsweise kann eine entsprechende Fixierhülse über einer Bithülse des Bithalters axial verschiebbar und/oder drehbar ausgebildet sein. Mittels einer Axialverschiebung und/oder Drehung der Fixierhülse kann der Bithalter zwischen einer ein an der Aufnahmeeinrichtung formschlüssig aufgenommenes Bit fixierend in Eingriff nehmenden Position und einer das an der Aufnahmeeinrichtung formschlüssig aufgenommene Bit freigebenden Position überführt werden. Beispielsweise kann ein entsprechender Mechanismus so ausgebildet sein, dass ein bloßes Vorschieben der zum Beispiel als Spannbüchse ausgebildeten Fixierhülse eine Arretierung des Bits bewerkstelligt und ein Zurückziehen der Fixierhülse eine Freigabe des Bits bewirkt. Dies ermöglicht einen sehr schnellen, intuitiven und einfachen (insbesondere einhändigen) Bitwechsel.

Gemäß einem exemplarischen Ausführungsbeispiel kann die Fixierhülse ausgebildet sein, mittels Verschiebens entlang der Bithülse ein an der Aufnahmeeinrichtung aufgenommenes Bit selektiv zu fixieren oder zu lösen. Ein Verschieben kann durch einen Benutzer erfolgen. Optional kann aber auch ein selbsttätiger Mechanismus (zum Beispiel ein Federmechanismus) die Fixierhülse nach Beendigung einer Betätigung durch einen Benutzer in eine Soll-Position zurückbefördern. Ein Fixieren des Bits in der Aufnahmeeinrichtung mittels der Fixierhülse kann zum Beispiel mittels einer Kugelklemmung (bevorzugt mittels einer Vierfach-Kugelklemmung) und/oder einer Feder erreicht werden. Der Bithalter klemmt dann auf Fläche, sodass ein Spiel zwischen Bit und Bithalter reduziert werden kann. Mit Vorteil bewirkt dies beispielsweise beim Bohren eine hohe Rundlaufgenauigkeit. Eine Rändelung oder dergleichen kann als Antirutsch-Zone an einer Außenseite der Fixierhülse ausgebildet sein, sodass beim Öffnen und Schließen des Bithalters kein Abrutschen erfolgt. Beispielsweise lässt sich in intuitiver Weise ein Öffnen des Bithalters durch Vorschieben der Fixierhülse und ein Schließen durch Zurückziehen der Fixierhülse bewerkstelligen.

Gemäß der Erfindung ist die Stoßlastschutzeinrichtung zum Auffangen einer beim Anstoßen an einen Verankerungsgrund auf die Fixierhülse des Bithalters einwirkende Stoßbewegung ausgebildet, um dadurch eine Beschädigung oder Zerstörung der Fixierhülse zu unterbinden. Dies kann durch eine derartige Anordnung und Konfiguration der Stoßlastschutzeinrichtung erreicht werden, dass beim Anstoßen des Bithalters an den Verankerungsgrund nur die Stoßlastschutzeinrichtung einer Kontaktbelastung ausgesetzt wird, nicht hingegen die anderen Komponenten des Bithalters.

Gemäß einem exemplarischen Ausführungsbeispiel kann der Bithalter eine (insbesondere die Aufnahmeeinrichtung aufweisende) Bithülse aufweisen, über der die Fixierhülse montiert ist. Insbesondere kann die Fixierhülse verschiebbar über der Bithülse montiert sein. Mittels Verschiebens der Fixierhülse relativ zur Bithülse kann dann auch ein benutzerdefiniertes Fixieren oder Freigeben des Bits an der Aufnahmeeinrichtung erfolgen.

Gemäß einem exemplarischen Ausführungsbeispiel kann die Bithülse ein Außengewinde aufweisen, auf dem ein Innengewinde der Stoßlastschutzeinrichtung aufschraubbar oder aufgeschraubt ist. Ein solches Außengewinde kann sich an einem bitseitigen Ende der Bithülse befinden. Auf diese Weise kann die Stoßlastschutzeinrichtung räumlich besonders nah an jener Seite des Bithalters angebracht (genauer gesagt aufgeschraubt) werden, die im Betrieb dem Verankerungsgrund zugewandt ist. Eine solche Schraubverbindung ermöglicht auch ein einfaches Auswechseln der einer mechanischen Belastung und somit einem Verschleiß in besonderer Weise ausgesetzten Stoßlastschutzeinrichtung.

Gemäß einem exemplarischen Ausführungsbeispiel kann die Stoßlastschutzeinrichtung also auswechselbar (insbesondere auf- und abschraubbar) am Bithalter montiert sein. Hierfür kann ein vorzugsweise metrisches Gewinde an der Stoßlastschutzeinrichtung gebildet sein, das mit einem korrespondierenden Gewinde an einer Bithülse des Bithalters verschraubbar ist. Dies erlaubt die Auswechslung einer verschlissenen Stoßlastschutzeinrichtung. Ferner ist dadurch ein Bithalter mit unterschiedlichen Stoßlastschutzeinrichtungen unterschiedlicher Größen verwendbar, wobei jede Größe einer Schraubengröße entspricht.

Gemäß einem alternativen Ausführungsbeispiel kann die Stoßlastschutzeinrichtung einstückig mit bzw. unabnehmbar von der Bithülse des Bithalters ausgebildet sein. Zum Beispiel kann die Stoßlastschutzeinrichtung rückseitig (und optional zusätzlich vorderseitig) an der Bithülse verschweißt und/oder vernietet sein. Dies verunmöglicht es mit Vorteil, dass sich die Stoßlastschutzeinrichtung mit der Zeit von der Bithülse lockert.

Gemäß einem exemplarischen Ausführungsbeispiel kann die Fixierhülse antriebswerkzeugseitig und die Stoßlastschutzeinrichtung bitseitig über der Bithülse montiert sein, vorzugsweise koaxial. Sowohl die Stoßlastschutzeinrichtung als auch die Fixierhülse können Ringbauteile sein, die auf die Bithülse aufgeschoben oder aufgeschraubt werden können. In Setzrichtung des Befestigungselements wird die Stoßlastschutzeinrichtung vorzugsweise vor der Fixierhülse angeordnet, um letztere vor einer Stoßbelastung zu schützen.

Gemäß einem exemplarischen Ausführungsbeispiel kann sich die Fixierhülse in axialer Richtung entlang maximal 50%, insbesondere entlang maximal 40%, einer Axialerstreckung der Bithülse erstrecken. Dies gewährleistet eine händische Betätigung der Fixierhülse durch einen Benutzer und lässt ausreichend Platz, um auch die Stoßlastschutzeinrichtung über der Bithülse montieren zu können.

Gemäß einem exemplarischen Ausführungsbeispiel kann sich die Stoßlastschutzeinrichtung in axialer Richtung entlang maximal 30%, insbesondere entlang maximal 20%, der Axialerstreckung der Bithülse erstrecken. Dies erlaubt eine platzsparende Konfiguration der Stoßlastschutzeinrichtung und somit ein kompaktes Design des Bithalters. Die genannten Dimensionen haben sich als ausreichend erwiesen, eine signifikante Reduktion der Stoßlast zu erreichen.

Gemäß einem exemplarischen Ausführungsbeispiel kann die Aufnahmeeinrichtung einen Innensechskant aufweisen. Anders ausgedrückt kann in der Aufnahmeeinrichtung eine Aufnahmeöffnung gebildet sein, die umfänglich durch einen Innensechskant begrenzt ist. Dies ermöglicht ein Aufstecken eines einer Antriebsspitze gegenüberliegenden Außensechskants des Bits auf die Aufnahmeeinrichtung mit Innensechskant durch Formschluss, womit auch eine Drehmomentübertragung zwischen Bithalter und Bit ermöglicht ist.

Gemäß einem exemplarischen Ausführungsbeispiel kann die Kupplungseinrichtung einen Außensechskant aufweisen. Dann kann der Außensechskant der Kupplungseinrichtung in ein Futter eines Antriebswerkzeugs (beispielsweise einer Bohrmaschine oder eines Akkuschraubers) unter Ermöglichung einer Drehmomentübertragung eingesetzt werden.

Gemäß einem exemplarischen Ausführungsbeispiel kann ein Außendurchmesser der Stoßlastschutzeinrichtung größer als ein maximaler Außendurchmesser des Befestigungselements sein, insbesondere größer als ein maximaler Außendurchmesser eines Kopfes des Befestigungselements sein. Dies ermöglicht es, mittels der Stoßlastschutzeinrichtung einen Stoßschutz der Bithülse und der Fixierhülse nicht nur in axialer Richtung, sondern auch in radialer Richtung bereitzustellen.

Gemäß einem exemplarischen Ausführungsbeispiel kann das Verfahren ein Einbringen des Befestigungselements in einen Holz aufweisenden Verankerungsgrund aufweisen. Insbesondere kann das Verfahren ein Einbringen des Befestigungselements in den Verankerungsgrund derart aufweisen, dass ein mittels des Bits angetriebener Kopf des Befestigungselements sich im eingebrachten Zustand tiefer in den Verankerungsgrund hinein erstreckt als eine Außenfläche des Verankerungsgrunds. In dem relativ weichen Verankerungsgrund Holz ist die Tendenz, beim Setzen eines Befestigungselements (insbesondere einer Holzschraube) den Kopf des Befestigungselements im Inneren des Verankerungsgrunds zu versenken und somit ein durch den Vorschub der Schraube weiter begünstigten kraftintensiven Aufprall des Bithalters auf dem Verankerungsgrund zu erhalten, besonders groß. Damit ist herkömmlich auch die Gefahr besonders groß, dass der Bithalter beim Aufprall auf den Verankerungsgrund einer exzessiven Kraft ausgesetzt und dadurch beschädigt wird. Das Vorsehen einer Stoßlastschutzeinrichtung an dem Bithalter ist unter solchen Umständen daher besonders vorteilhaft.

Gemäß einem exemplarischen Ausführungsbeispiel kann die Stoßlastschutzeinrichtung entlang eines gesamten Umfangs des Bithalters radial über den Rest des Bithalters hinausstehen. Dies bietet dem Bithalter einen vollumfänglichen Stoßschutz.

Im Folgenden werden exemplarische Ausführungsbeispiele der vorliegenden Erfindung mit Verweis auf die folgenden Figuren detailliert beschrieben.
Figur 1 zeigt eine dreidimensionale Ansicht eines Bithalters mit einem daran aufgenommenen Bit gemäß einem exemplarischen Ausführungsbeispiel der Erfindung.
Figur 2 zeigt eine Seitenansicht eines Bithalters mit einem daran aufgenommenen Bit gemäß einem exemplarischen Ausführungsbeispiel der Erfindung.
Figur 3 zeigt eine Seitenansicht des Bithalters gemäß Figur 2 getrennt von dem Bit.
Figur 4 zeigt eine Seitenansicht des Bithalters gemäß Figur 2 und Figur 3 getrennt von einer Stoßlastschutzeinrichtung.
Figur 5 zeigt eine Seitenansicht eines Bithalters mit einem daran aufgenommenen Bit gemäß einem exemplarischen Ausführungsbeispiel der Erfindung.
Figur 6 zeigt eine Seitenansicht des Bithalters gemäß Figur 5 ohne Bit.
Figur 7 zeigt eine Seitenansicht eines Bithalters mit einem daran aufgenommenen Bit gemäß einem exemplarischen Ausführungsbeispiel der Erfindung.
Figur 8 zeigt eine Seitenansicht des Bithalters gemäß Figur 7 ohne Bit.
Figur 9 zeigt eine dreidimensionale Ansicht eines Bithalters mit einem daran aufgenommenen Bit gemäß einem exemplarischen Ausführungsbeispiel der Erfindung.
Figur 10 zeigt eine andere dreidimensionale Ansicht des Bithalters gemäß Figur 9.
Figur 11 zeigt eine weitere dreidimensionale Ansicht des Bithalters gemäß Figur 9 und Figur 10.
Figur 12 zeigt eine in etwa Figur 11 entsprechende dreidimensionale Ansicht des Bithalters ohne Bit.
Figur 13 bis Figur 17 zeigen Seitenansichten eines Bithalters mit einem daran aufgenommenen Bit während eines Verfahrens zum Einbringen eines Befestigungselements in einen Verankerungsgrund gemäß einem exemplarischen Ausführungsbeispiel der Erfindung.
Figur 18 bis Figur 20 zeigen Seitenansichten von Bithaltern mit daran aufgenommenen Bits während einem Einbringen eines Befestigungselements in einen Verankerungsgrund gemäß exemplarischen Ausführungsbeispielen der Erfindung.
Figur 21 zeigt eine Seitenansicht einer Stoßlastschutzeinrichtung eines Bithalters gemäß einem exemplarischen Ausführungsbeispiel der Erfindung.

Gleiche oder ähnliche Komponenten in unterschiedlichen Figuren sind mit gleichen Bezugsziffern versehen.

Bevor bezugnehmend auf die Figuren exemplarische Ausführungsbeispiele der Erfindung beschrieben werden, sollen noch einige allgemeine Aspekte der Erfindung erläutert werden.

Herkömmliche Bithalter können ein unzureichendes Taumelverhalten bei Verwendung einer Kombination aus einer Holzschraube, einem mechanischen Bithalter und einem Akkuschrauber zeigen. In einer solchen Kombination mit Bithalter kann die Holzschraube einer ausgeprägten Taumelbewegung ausgesetzt sein. Hierbei kann es zum Beispiel bei einer Verschraubung in Robine oder Baubuche sogar zu einem unerwünschten Durchdrehen von Holzschrauben kommen. Dies kann beispielsweise in unerwünschter Weise bewirken, dass sich am Bit zahlreiche Metallspäne absetzen, wodurch die Passgenauigkeit von Bit/Schraube weiter herabgesetzt werden kann, sodass ein Durchdrehen nachfolgender Schrauben noch ausgeprägter werden kann. Ferner kann es beim Entstehen von Metallspänen insbesondere beim Einsatz magnetischer Bithalter zu einem unerwünschten Anhaften der Metallspäne am Bithalter und somit zu einer weiter verringerten Setzqualität kommen.

Gemäß einem exemplarischen Ausführungsbeispiel der Erfindung ist ein stabiler mechanischer Bithalter geschaffen, der auch nicht-magnetisch ausgebildet werden kann und ein stark unterdrücktes Taumelverhalten zeigt. Vorteilhaft kann ein solcher vorzugsweise nicht-magnetischer mechanisch verstärkter Bithalter mit einem integriertem Stoßschutz ausgestattet sein.

Insbesondere im Holzbau werden Senkkopfschrauben häufig tiefer als bis zur Holzoberfläche versenkt. Durch das tiefere Versenken des Schraubenkopfes kann eine Fixierhülse eines mechanischen Bithalters auf die Holzoberfläche auftreffen und einen starken mechanischen Stoß erleiden. Eine wiederholte Stoßbelastung dieser Art kann zu einer mechanischen Beschädigung der Fixierhülse des Bithalters führen.

Um solche Nachteile zu überwinden oder zumindest abzumildern, wird gemäß der Erfindung ein vorzugsweise angeschrägter Stoßring oder eine andere Stoßlastschutzeinrichtung an der Spitze des Bithalters angebracht. Ein solcher Stoßring fängt die Stoßbewegung ganz oder teilweise auf und verhindert oder reduziert eine Beschädigung der Fixierhülse. Die Anschrägung erhöht den Einschraubwiderstand und verhindert dadurch eine zu tiefe Versenkung des Schraubenkopfes. Bei einem Weiterdrehen der Schraube erfolgt ein weiterer Zusammenzug der beiden Bauteile durch den Vorschub des Schraubengewindes, bis der Bit aus dem Antrieb rutscht. Eine zulässige Versenkungstiefe kann abhängig vom Überstand des Bits bzw. infolge dessen von der Bitlänge justiert werden. Um eine Langlebigkeit des Stoßringes zu erreichen, kann es vorteilhaft sein, den Stoßring mechanisch zu härten und/oder so auszubilden, dass die auf den Stoßring einwirkende Stoßkraft gedämpft oder reduziert wird.

Beim Ausbilden eines solchen Bithalters kann eine relativ kurze Fixierhülse mit einer relativ langen Bithülse für die Bitaufnahme kombiniert werden, sodass der Stoßring oder eine andere Stoßlastschutzeinrichtung gemeinsam mit einer Fixierhülse auf eine Bithülse aufgeschoben bzw. dort montiert werden kann. Die beschriebene Bemaßung von Bithülse und Fixierhülse ist also vorteilhaft, damit der aufgeschraubte Stoßschutz befestigt werden kann. Ein solcher aufgeschraubter Stoßschutz ist besonders vorteilhaft. Die Kürzung der Arretierung bzw. der Fixierhülse ist vorteilhaft, damit der Bithalter nicht zu lang wird und die Arretierung noch bewegt werden kann.

Ferner kann mit Vorteil ein metrisches Gewinde (vorzugsweise ein Außengewinde) an dem dem Bit zugewandten Ende der Bithülse ausgebildet werden, um eine Stoßlastschutzeinrichtung auswechselbar aufschrauben zu können. Da im Betrieb des Bithalters die Stoßlastschutzeinrichtung in besonderer Weise einer Krafteinwirkung ausgesetzt sein kann, ist deren auswechselbares Anbringen am Bithalter vorteilhaft, um die Stoßlastschutzeinrichtung als Verschleißteil unter Weiterverwendung des Rests des Bithalters bedarfsweise austauschen zu können. Mit anderen Worten ist dann ein Aufschrauben des beispielsweise scheibenförmigen mechanischen Stoßschutzes als Verschleiß- bzw. Ersatzteil möglich.

Vorteilhaft kann der Durchmesser einer solchen Stoßschutzscheibe größer als ein Kopfdurchmesser des Befestigungselements (insbesondere größer als ein Schraubenkopf) sein. Beispielsweise kann ein Kerndurchmesser einer mittels des Bithalters samt Bit betätigten Senkkopfschraube 10 mm betragen und ein zugehöriger Schraubenkopf 18,5 mm Durchmesser haben. Dann kann beispielsweise ein Durchmesser einer Stoßschutzscheibe 20,5 mm betragen und eine Dicke der Stoßschutzscheibe 4 mm betragen. Für eine Schraube mit Kerndurchmesser von 8 mm kann der Durchmesser der Stoßschutzscheibe 18 mm, für einen Kerndurchmesser von 6 mm kann der Durchmesser der Stoßschutzscheibe 14 mm und für einen Kerndurchmesser von 5 mm kann der Durchmesser der Stoßschutzscheibe 11,5 mm sein. Die Abnehmbarkeit der verschraubten Stoßschutzscheibe ermöglicht zum einem den einfachen Austausch der in besonderer Weise Verschleiß ausgesetzten Stoßschutzscheibe und zum anderen im Falle einer Aufschraubung einer tief versenkten Senkkopfschraube die tiefere Einsetzung in das Schraubloch sowie eine Abstimmung auf den Schraubendurchmesser.

Im Betrieb kann ein Bithalter gemäß einem exemplarischen Ausführungsbeispiel der Erfindung mit dem Bit und mit dem vorzugsweise als Schraube ausgebildeten Befestigungselement kombiniert werden und damit das Befestigungselement in den Verankerungsgrund eingeschraubt werden. Hierbei kann eine Abstimmung des Bitüberstandes bzw. der Bitlänge auf die Bithülse vorgenommen werden.

Somit kann gemäß einem exemplarischen Ausführungsbeispiel der Erfindung ein stabiler nichtmagnetischer mechanischer Bithalter für den Holzbau geschaffen werden. Ein bevorzugtes Anwendungsgebiet eines solchen Bithalters ist der Holzbau bei Verwendung von Schrauben insbesondere im Bereich eines Kerndurchmessers zwischen 5 mm und 10 mm. Experimente haben gezeigt, dass die Mechanik herkömmlicher Bithalter bei einem tiefen Versenken der Senkkopfschrauben beschädigt werden kann, sodass Benutzer bevorzugt auf 50 mm Bits oder magnetische Bithalter zurückgreifen. Gemäß einem Ausführungsbeispiel der Erfindung kann die Verwendung eines Bithalters auch beim Versenken eines Befestigungselements im Inneren eines Verankerungsgrunds flexibel durchgeführt werden. Gemäß einem exemplarischen Ausführungsbeispiel kann auch in einem solchen Szenario ein zuverlässiger mechanischer Stoßschutz des Bithalters sichergestellt werden.

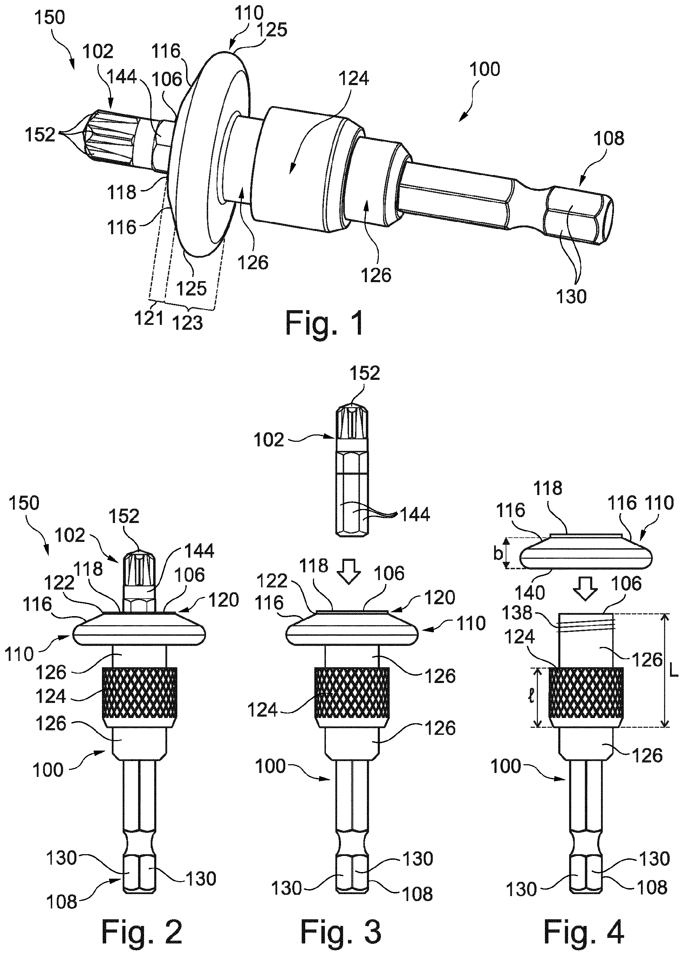

**Figur 1** zeigt eine dreidimensionale Ansicht eines Bithalters 100 mit einem daran aufgenommenen Bit 102 gemäß einem exemplarischen Ausführungsbeispiel der Erfindung.

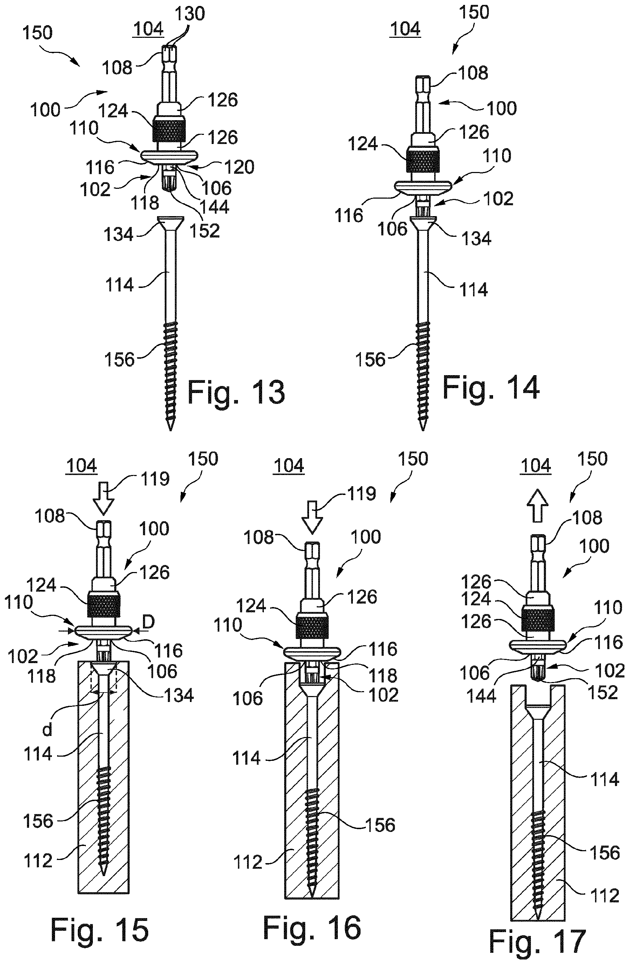

Genauer gesagt ist in Figur 1 eine Anordnung 150 zum Einbringen eines in Figur 1 nicht dargestellten Befestigungselements (siehe Bezugszeichen 114 in Figur 13 bis Figur 20) in einen in Figur 1 nicht dargestellten Verankerungsgrund (siehe Bezugszeichen 112 in Figur 15 bis Figur 20) gezeigt. Das Befestigungselement kann eine Holzschraube und der Verankerungsgrund kann ein Holzuntergrund sein.

Die Anordnung 150 weist einen metallischen Bithalter 100 zum Halten eines metallischen Bits 102 an einem ebenfalls nicht in Figur 1 dargestellten Antriebswerkzeug (beispielsweise ein Akkuschrauber) auf. Ferner enthält die Anordnung 150 das Bit 102, das gemäß Figur 1 an einer Aufnahmeeinrichtung 106 des Bithalters 100 aufgenommen ist. Somit dient der Bithalter 100 zum Halten des Bits 102 an dem Antriebswerkzeug, welches wiederum den Bithalter 100 und dadurch mittelbar den Bit 102 und schließlich das von dem Bit 102 in Eingriff genommene Befestigungselement drehantreiben kann.

Wie in Figur 1 gezeigt, weist der Bithalter 100 an seinem einen Ende die bereits angesprochene Aufnahmeeinrichtung 106 auf, die zum formschlüssigen Aufnehmen des Bits 102 in einer Aufnahmeöffnung der Aufnahmeeinrichtung 106 ausgebildet ist. In der Aufnahmeöffnung kann ein Innensechskant gebildet sein, der einen Außensechskant 144 des Bits 102 aufnehmen kann. Ferner enthält der Bithalter 100 an seinem gegenüberliegenden Ende eine Werkzeugkupplung 108, die zum formschlüssigen Kuppeln mit dem Antriebswerkzeug ausgebildet ist. Gemäß Figur 1 weist die Werkzeugkupplung 108 einen Außensechskant 130 auf, der in einem Futter des Antriebswerkzeugs aufgenommen werden kann.

Der Bithalter 100 enthält darüber hinaus eine Stoßlastschutzeinrichtung 110, die ein an der Aufnahmeeinrichtung 106 aufgenommenes Ende des Bits 102 umfänglich umgibt. Die Stoßlastschutzeinrichtung 110 fungiert zum Verringern einer auf den Bithalter 100 einwirkenden Stoßlast beim Anstoßen an den Verankerungsgrund am Ende des Vorgangs das drehenden Setzens des Befestigungselements in den Verankerungsgrund. Anders ausgedrückt stößt die Stoßlastschutzeinrichtung 110 110 stoßdämpfend, stoßaufnehmend oder stoßabsorbierend an den Verankerungsgrund an, wenn das mittels des Bits 102, des Antriebswerkzeugs und des Bithalters 100 angetriebene Befestigungselement tief in den Verankerungsgrund eingebracht wird. Wie in Figur 1 zu erkennen ist, weist die Stoßlastschutzeinrichtung 110 eine im Betrieb dem Verankerungsgrund zugewandte Schrägfläche 116 auf, die als ringförmige Schrägfläche 116 ausgebildet ist. Anschaulich trifft daher die Stoßlastschutzeinrichtung 110 nicht frontal, sondern geneigt auf eine Außenfläche des Verankerungsgrunds auf, was zu einer stoßdämpfenden und reibungsbehafteten Krafteinleitung und daher zu einem mechanischen Schutz des Bithalters 100 führt. Ferner kann die Stoßlastschutzeinrichtung 110 eine parallel zu dem Verankerungsgrund 112 orientierte Stirnfläche 118 zwischen der Schrägfläche 116 und dem Verankerungsgrund aufweisen, die vorzugsweise als kleinflächige ringförmige Stirnfläche 118 ausgebildet ist. Die ringförmige Stirnfläche 118 der Stoßlastschutzeinrichtung 110 kann ein axiales Ende des Bithalters 100 bilden. Beim Aufsetzen auf den Verankerungsgrund kann zunächst ein kleinflächiger Kontakt zwischen der ringförmigen Stirnfläche 118 und dem Verankerungsgrund auftreten, der ein Verkippen des Bithalters 100 hemmt. Nachfolgend kann die großflächigere Schrägfläche 116 in Kontakt mit dem Verankerungsgrund geraten, womit insbesondere eine ansonsten auf eine Fixierhülse 124 des Bithalters 100 einwirkende Stoßkraft reduziert oder abgefangen werden kann. Die Schrägfläche 116 gibt einem Benutzer eine ausreichend frühzeitige haptische Rückmeldung, dass die Außenseite des Verankerungsgrunds erreicht ist.

Gemäß Figur 1 weist die Stoßlastschutzeinrichtung 110 einen dem Verankerungsgrund im Betrieb zugewandten in etwa kegelstumpfförmigen Ringkörperabschnitt 121 auf. Daran schließt sich rückseitig ein scheibenförmiger Ringkörperabschnitt 123 mit im Wesentlichen halbkreisförmiger Umlaufkante 125 an. Die beiden Ringkörperabschnitte 121, 123 sind einstückig ausgebildet. Die Stoßlastschutzeinrichtung 110 kann sich im an der Aufnahmeeinrichtung 106 aufgenommenen Zustand des Bits 102 umfänglich geschlossen um das Bit 102 herum erstrecken und daher einen Stoßschutz auch in radialer Richtung bereitstellen. Mit Vorteil kann die Stoßlastschutzeinrichtung 110 auch aus einem nicht-magnetischen Material hergestellt sein, was ein unerwünschtes Anhaften von metallischen Partikeln am Bithalter 100 verunmöglicht, die im Betrieb beispielsweise vom Befestigungselement abgeschert werden können. Ein solches Anhaften von metallischen Partikeln kann die Präzision des Einbringens des Befestigungselements in den Verankerungsgrund mittels des Bithalters 100 und des Bits 102 beeinträchtigen.

Ferner zeigt Figur 1, dass der Bithalter 100 eine manschettenförmige Fixierhülse 124 zum selektiven Fixieren oder Lösen des Bits 102 an der Aufnahmeeinrichtung 106 aufweist. Die Fixierhülse 124 ist so ausgebildet, dass mittels axialen Verschiebens der Fixierhülse 124 entlang einer Bithülse 126 eine Fixierung eines an der Aufnahmeeinrichtung 106 aufgenommenen Bits 102 aktiviert oder deaktiviert werden kann. Wird die Fixierhülse 124 in Richtung des Bits 102 nach vorne (d.h. gemäß Figur 1 nach links) geschoben, kann eine das Bit 102 fixierende Kugelklemmung (nicht gezeigt) im Inneren der Fixierhülse 124 gelöst werden und der Bit 102 mit geringem Kraftaufwand aus der Aufnahmeeinrichtung 106 entnommen werden. Wird indes die Fixierhülse 124 vom Bit 102 weg nach hinten geschoben (d.h. gemäß Figur 1 nach rechts), kann die Kugelklemmung im Inneren der Fixierhülse 124 das Bit 102 in Eingriff nehmen und an der Aufnahmeeinrichtung 106 fixieren. Dieser Mechanismus ist vorteilhaft einhändig betätigbar.

Die oben beschriebene Stoßlastschutzeinrichtung 110 fungiert mit Vorteil zum Auffangen einer beim Anstoßen an einen Verankerungsgrund auf die Fixierhülse 124 des Bithalters 100 einwirkende Stoßbewegung. Die Stoßlastschutzeinrichtung 110 schützt also besonders vor einer Beschädigung oder sogar Zerstörung der Fixierhülse 124. Wie in Figur 1 dargestellt ist, schirmt die vorderseitige Stoßlastschutzeinrichtung 110 die dahinter geschützt angebrachte Fixierhülse 124 vor einem direkten mechanischen Aufprall auf den Verankerungsgrund ab.

Figur 1 zeigt darüber hinaus, dass der Bithalter 100 zusätzlich die die Aufnahmeeinrichtung 106 aufweisende manschettenförmige Bithülse 126 aufweist, über der die Fixierhülse 124 montiert bzw. aufgeschoben ist. Somit ist die Fixierhülse 124 antriebswerkzeugseitig über der Bithülse 126 montiert bzw. aufgeschoben. Ferner ist die Stoßlastschutzeinrichtung 110 bitseitig über der Bithülse 126 angebracht, beispielsweise dort aufgeschraubt.

Wird die Werkzeugkupplung 108 an dem Antriebswerkzeug montiert und greift eine Antriebsspitze 152 des Bits 102 in einen invers geformten Antrieb eines Kopfs des Befestigungselements ein, das mit seiner Spitze auf einen Verankerungsgrund aufgesetzt wird, so werden mittels Drehantreibens des Antriebswerkzeugs auch der Bithalter 100, der Bit 102 und das Befestigungselement drehend angetrieben. Dadurch dringt das beispielsweise als Holzschraube ausgebildete Befestigungselement drehend in den beispielsweise aus Holz bestehenden Verankerungsgrund ein. Wird das Befestigungselement tief ins Innere des Verankerungsgrundes eingeführt, sodass auch dessen bitseitiges Ende (beispielsweise ein Schraubenkopf) ins Innere des Verankerungsgrunds eindringt, gerät ab einer bestimmten Eindringtiefe die Vorderfläche der Stoßlastschutzeinrichtung 110 in Berührkontakt mit einer ebenen Außenfläche des Verankerungsgrunds. Aufgrund der Neigung der Schrägfläche 116 gegenüber dem ebenen Verankerungsgrund ist allerdings eine ungehemmte Frontalkollision zwischen Bithalter 100 und Verankerungsgrund vermieden. Stattdessen erfolgt eine schräge und reibungsbehaftete Kraftübertragung, welche die auf den Bithalter 100 einwirkende Stoßlast günstig beeinflusst. Das Drehen des Befestigungselements samt Bithalter 100 beim Setzen des Befestigungselements in den Verankerungsgrund führt beim Berühren des Verankerungsgrunds durch die Stoßlastschutzeinrichtung 110 zu einer hohen Reibungskraft, die ein weiteres Eindringen des Befestigungselements und des Bithalters 100 in den Verankerungsgrund hemmt. Durch die beschriebenen Phänomene kommt es vorteilhaft zu einer Reduktion der Stoßlast, die auf den Bithalter 100 und insbesondere auf deren Fixierhülse 124 einwirkt.

Da die Stoßlastschutzeinrichtung 110 entlang eines gesamten Umfangs des Bithalters 100 radial über den Rest des Bithalters 100 hinaussteht, schützt die Stoßlastschutzeinrichtung 110 insbesondere die Fixierhülse 124 vor seitlichen mechanischen Einwirkungen.

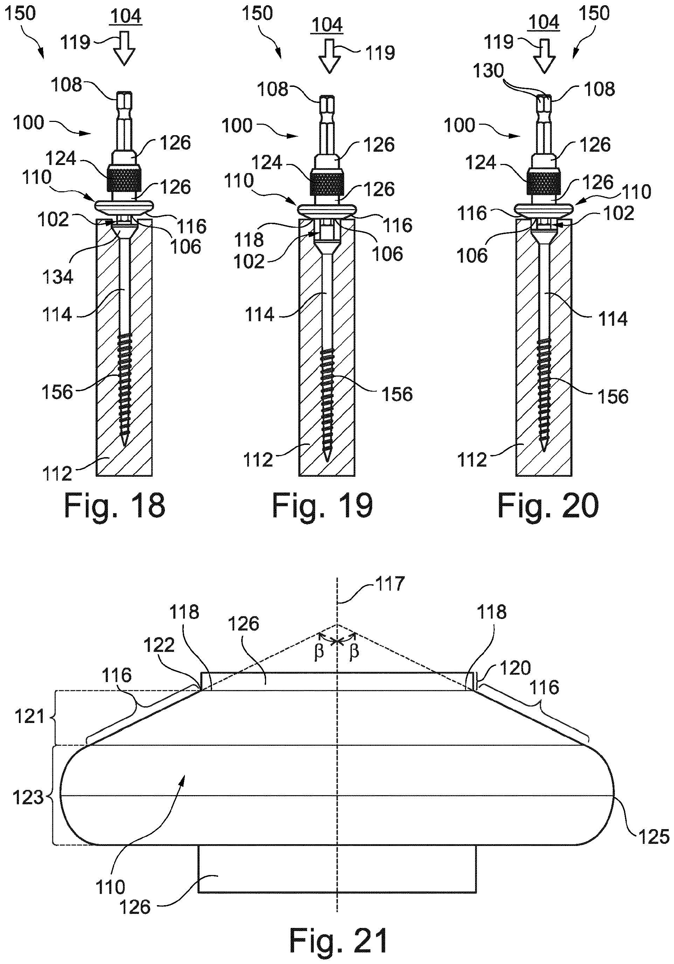

**Figur 2** zeigt eine Seitenansicht eines Bithalters 100 mit einem daran aufgenommenen Bit 102 gemäß einem exemplarischen Ausführungsbeispiel der Erfindung. **Figur 3** zeigt eine Seitenansicht des Bithalters 100 gemäß Figur 2, aber getrennt von dem Bit 102. **Figur 4** zeigt eine Seitenansicht des Bithalters 100 gemäß Figur 2 und Figur 3, aber ohne Bit 102 und getrennt von einer Stoßlastschutzeinrichtung 110. **Figur 21** zeigt eine Seitenansicht einer Stoßlastschutzeinrichtung 110 des Bithalters 100 gemäß Figur 2 bis Figur 4.

Insbesondere Figur 4 zeigt, dass die Stoßlastschutzeinrichtung 110 an dem Bithalter 100 auswechselbar angebracht sein kann. Genauer gesagt kann die Stoßlastschutzeinrichtung 110 an einem Außengewinde 138 der Bithülse 126 aufgeschraubt oder aufgeschraubt werden. Auf dem Außengewinde 138 am bitseitigen Ende der Bithülse 126 kann ein Innengewinde 140 der Stoßlastschutzeinrichtung 110 aufgeschraubt werden. Auf diese Weise kann die Stoßlastschutzeinrichtung 110, die in besonderer Weise einer mechanischen Einwirkung beim Setzvorgang des Befestigungselements ausgesetzt ist, nach Verschleiß vom Bithalter 100 abgeschraubt werden und durch eine neue Stoßlastschutzeinrichtung 110 ersetzt werden.

Optional kann ein Ende der Bithülse 126 gegenüber der ringförmigen Stirnfläche 118 der Stoßlastschutzeinrichtung 110 in axialer Richtung bzw. entlang der Zentralachse 117 leicht hervorstehen, um dadurch einen hohlzylindrischen Ringstutzen 120 (beispielsweise mit einer axialen Länge von 1-2 mm) zu bilden, der an einer Stufe 122 in die ringförmige Stirnfläche 118 übergeht. Ein solcher Ringstutzen 120 kann mit Vorteil zum vorderseitigen Verschweißen der Stoßlastschutzeinrichtung 110 mit der Bithülse 126 verwendet werden. Ein solches optionales Verschweißen der Stoßlastschutzeinrichtung 110 mit der Bithülse 126 kann vorteilhaft sein, wenn eine besonders robuste Ausbildung des Bithalters 100 gewünscht wird. Unter besonders rauen Einsatzbedingungen kann eine aufgeschraubte Stoßlastschutzeinrichtung 110 sich von der Bithülse 126 im Betrieb unerwünscht lösen. Dies kann mittels Verschweißens unterbunden werden. Eine besonders hohe Robustheit kann erreicht werden, wenn das Verschweißen der Stoßlastschutzeinrichtung 110 an der Bithülse 126 an einer axialen Vorderseite und an einer axialen Rückseite der Stoßlastschutzeinrichtung 110 erfolgt.

Wie in Figur 4 zu erkennen ist, erstreckt sich die Fixierhülse 124 in axialer Richtung entlang einer Axialerstreckung I von nur ungefähr 35% der Axialerstreckung L der Bithülse 126. Die Stoßlastschutzeinrichtung 110 erstreckt sich in axialer Richtung entlang einer Axialerstreckung b von nur ungefähr 20% der Axialerstreckung L der Bithülse 126. Dies ermöglicht eine Anbringung der Fixierhülse 124 und der Stoßlastschutzeinrichtung 110 auf der Fixierhülse 126, ohne Funktion und Handhabung von Fixierhülse 124 und Stoßlastschutzeinrichtung 110 negativ zu beeinträchtigen.

Gemäß Figur 21 weicht ein spitzer Winkel β zwischen der Schrägfläche 116 und einer Zentralachse 117 des Bithalters 100 von einem rechten Winkel um nur ungefähr 15-20° ab. Derartige Winkel β stellen einen guten Kompromiss zwischen einer günstigen Stoßkraftdämpfung und der Vermeidung einer Kippanfälligkeit dar.

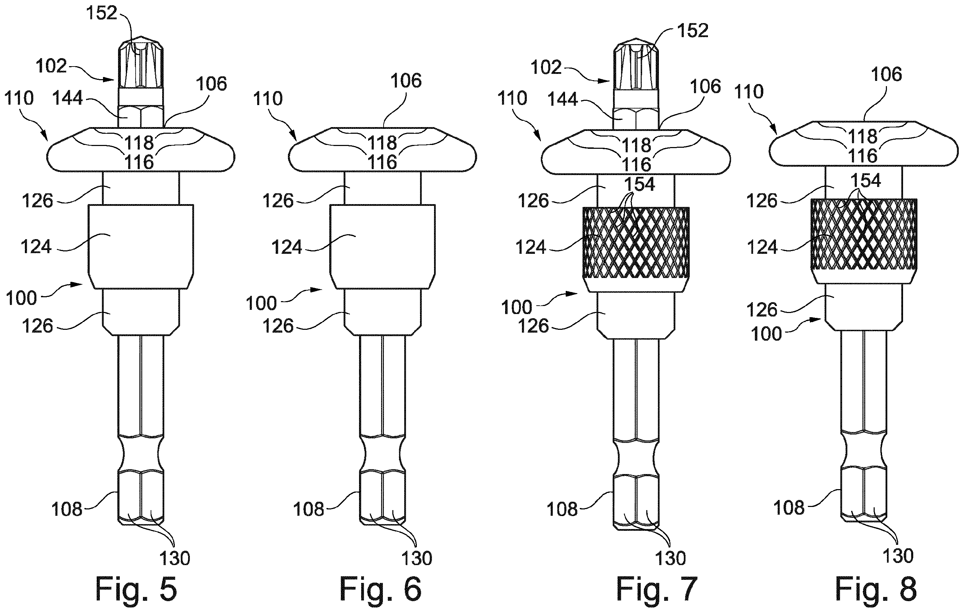

**Figur 5** zeigt eine Seitenansicht eines Bithalters 100 mit einem daran aufgenommenen Bit 102 gemäß einem exemplarischen Ausführungsbeispiel der Erfindung. **Figur 6** zeigt eine Seitenansicht des Bithalters 100 gemäß Figur 5 ohne Bit 102.

Gemäß Figur 5 und Figur 6 bildet (im Unterschied zu Figur 21) die ringförmige Stirnfläche 118 der Stoßlastschutzeinrichtung 110 ein axiales Ende des Bithalters 100. Die Bithülse 126 hat ihr eines Ende gemäß diesem Ausführungsbeispiel im Inneren der Stoßlastschutzeinrichtung 110, oder besagtes Ende kann mit der ringförmigen Stirnfläche 118 fluchten.

**Figur 7** zeigt eine Seitenansicht eines Bithalters 100 mit einem daran aufgenommenen Bit 102 gemäß einem exemplarischen Ausführungsbeispiel der Erfindung. **Figur 8** zeigt eine Seitenansicht des Bithalters 100 gemäß Figur 7 ohne Bit.

Gemäß Figur 7 und Figur 8 ist eine Außenfläche der Fixierhülse 124 zumindest abschnittsweise mit einer Rändelung 154 versehen, die einem Benutzer die Handhabung der Fixierhülse 124 zum Fixieren bzw. Lösen des Bits 102 durch Zurück- und Vorschieben der Fixierhülse 124 auf der Bithülse 126 erleichtert. Anders ausgedrückt vereinfacht die Rändelung 154 die Greifbarkeit der Fixierhülse 124 durch einen Benutzer.

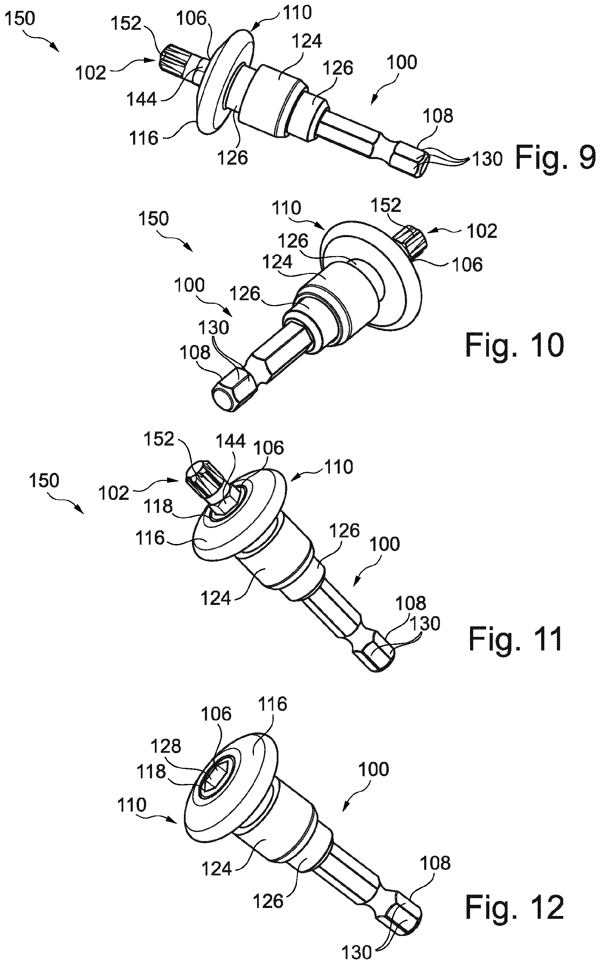

**Figur 9** zeigt eine dreidimensionale Ansicht eines Bithalters 100 mit einem daran aufgenommenen Bit 102 gemäß einem exemplarischen Ausführungsbeispiel der Erfindung. **Figur 10** zeigt eine andere dreidimensionale Ansicht des Bithalters 100 gemäß Figur 9. **Figur 11** zeigt eine weitere dreidimensionale Ansicht des Bithalters 100 gemäß Figur 9 und Figur 10. **Figur 12** zeigt eine Figur 11 entsprechende dreidimensionale Ansicht des Bithalters 100 ohne Bit.

Figur 9 bis Figur 12 veranschaulichen mit ihren diversen räumlichen Ansichten verschiedene Merkmale des Bithalters 100. Insbesondere ist in Figur 12 zu erkennen, dass die Aufnahmeeinrichtung 106 einen Innensechskant 128 zum Aufnehmen eines Außensechskants des Bits 102 aufweist.

Figur 13 bis Figur 17 zeigen Seitenansichten eines Bithalters 100 mit einem daran aufgenommenen Bit 102 während eines Verfahrens zum Einbringen eines Befestigungselements 114 in einen Verankerungsgrund 112 gemäß einem exemplarischen Ausführungsbeispiel der Erfindung.

In Figur 13 bis Figur 17 ist eine Anordnung 150 aus einem schematisch dargestellten Antriebswerkzeug 104, einem Bithalter 100, einem Bit 102, einem Befestigungselement 114 und einem Verankerungsgrund 112 dargestellt. Ein Futter des Antriebswerkzeugs 104, das zum Beispiel ein Akkuschrauber sein kann, wird mit der Werkzeugkupplung 108 des Bithalters 100 gekuppelt. Das als Holzschraube (beispielsweise als ASSY^{®}-Schraube der Anmelderin Würth) ausgebildete Befestigungselement 114 hat am Kopf 134 eine Vertiefung als Antrieb (nicht gezeigt), in den eine Antriebsspitze 152 des Bits 102 eingesetzt wird, um eine Drehmomentübertragung vom Bit 102 auf das Befestigungselement 114 zu ermöglichen. Wie in Figur 13 bis Figur 17 gezeigt, wird das am Bit 102 angebrachte Befestigungselement 114 mittels Drehantreibens des Antriebswerkzeugs 104 drehend in den aus Holz gebildeten Verankerungsgrund 112 eingebracht.

Wie in Figur 15 dargestellt, ist ein Außendurchmesser D der Stoßlastschutzeinrichtung 110 größer als ein maximaler Außendurchmesser d des Kopfes 134 des Befestigungselements 114.

Nachfolgend wird ein Verfahren zum Einbringen des Befestigungselements 114 in den Verankerungsgrund 112 mittels des Bits 102 und des Antriebswerkzeugs 104 sowie mittels des Bithalters 100 näher beschrieben:
Bezugnehmend auf **Figur 13** wird die Werkzeugkupplung 108 des Bithalters 100 mit dem Antriebswerkzeug 104 gekuppelt. Ferner wird der Bit 102 an der Aufnahmeeinrichtung 106 des Bithalters 100 aufgenommen.
Bezugnehmend auf **Figur 14** wird die Antriebsspitze 152 des Bits 102 in den Antrieb im Kopf 134 des Befestigungselements 114 eingeführt und dadurch ein Formschluss ausgebildet.
Bezugnehmend auf **Figur 15** wird dann das Befestigungselement 114 durch Aufbringen einer kombinierten Axial- und Drehkraft mittels des Bits 102, des Antriebswerkzeugs 104 und des Bithalters 100 in den Verankerungsgrund 112 eingebracht. Dies kann nach oder ohne Bilden einer Vorbohrung in dem Verankerungsgrund 112 erfolgen. Beim Eindrehen kann ein Außengewinde 156 an einem Schaft des Befestigungselements 114 in dem Verankerungsgrund 112 ein Gegengewinde schneiden. Dadurch kann das Befestigungselement 114 in den Holz aufweisenden Verankerungsgrund 112 gesetzt und dort verankert werden. Bei dem Zustand gemäß Figur 15 fluchtet eine Stirnfläche des Kopfs 134 des Befestigungselements 114 mit einer ebenen Außenfläche des Verankerungsgrunds 112.
Bezugnehmend auf **Figur 16** ist dargestellt, was bei einem noch tieferen Eindringen des Befestigungselements 114 in den Verankerungsgrund 112 passiert. Zunächst taucht der Kopf 134 des Befestigungselements 114 weiter in den Verankerungsgrund 112 ein, sodass auch das Bit 102 teilweise im Inneren des Verankerungsgrunds 112 befindlich ist. Beim Einbringen des Befestigungselements 114 in den Verankerungsgrund 112 wird also der mittels des Bits 102 angetriebene Kopf 134 des Befestigungselements 114 über die Außenfläche des Verankerungsgrunds 112 hinausgehend tiefer in den Verankerungsgrund 112 eingebracht. Dann stößt die Schrägfläche 116 der Stoßlastschutzeinrichtung 110 an die Außenfläche des Verankerungsgrunds 112 an. Dieser Schrägkontakt reduziert die auf den Bithalter 100 einwirkende Stoßkraft. Eine starke Reibungskraft beim Weiterdrehen der Stoßlastschutzeinrichtung 110 an der Außenfläche des Verankerungsgrunds 112 hemmt ebenfalls ein noch tieferes Eindringen das Befestigungselemente 114 in den Verankerungsgrund 112 und begrenzt daher zusätzlich die auf den Bithalter 100 einwirkende Last. Indem also der Bithalter 100 mit der Stoßlastschutzeinrichtung 110 ausgerüstet ist, wird die auf den Bithalter 100 einwirkende Stoßlast beim Anstoßen an den Verankerungsgrund 112 vermindert und der Bithalter 100 daher mechanisch geschützt.
Bezugnehmend auf **Figur 17** ist gezeigt, wie das Antriebswerkzeug 104 samt Bithalter 100 und Bit 102 von dem in den Verankerungsgrund 112 gesetzten Befestigungselement 104 abgenommen werden kann. Der Setzvorgang ist beendet, ohne dass der Bithalter 100 beschädigt worden ist.

Figur 18 bis Figur 20 zeigen Seitenansichten von Bithaltern 100 mit daran aufgenommenen Bits 102 während einem Einbringen eines Befestigungselements 114 in einen Verankerungsgrund 112 gemäß exemplarischen Ausführungsbeispielen der Erfindung.

Bezugnehmend auf **Figur 18** ist ein Szenario mit einer verlängerten Bithülse 126 und einem Bit 102 einer üblichen Länge dargestellt.

Bezugnehmend auf **Figur 19** ist ein Szenario mit einer Bithülse 126 einer üblichen Länge und einem Bit 102 einer üblichen Länge dargestellt.

Bezugnehmend auf **Figur 20** ist ein Szenario mit einer Bithülse 126 einer üblichen Länge und einem verkürzten Bit 102 dargestellt.

Figur 18 bis Figur 20 zeigt also, dass eine Abstimmung des Bitüberstandes, der Länge des Bits 102 und der Länge der Bithülse 120 möglich ist.

Ergänzend ist darauf hinzuweisen, dass "aufweisend" keine anderen Elemente oder Schritte ausschließt und "eine" oder "ein" keine Vielzahl ausschließt.

Bezugszeichen in den Ansprüchen sind nicht als Einschränkung anzusehen.

## Patentansprüche

1. Bithalter (100) zum Halten eines Bits (102) zum Kuppeln des Bits (102) mit einem Antriebswerkzeug (104), wobei der Bithalter (100) aufweist:
eine Aufnahmeeinrichtung (106), die zum Aufnehmen des Bits (102) ausgebildet ist; und
eine Werkzeugkupplung (108), die zum Kuppeln mit dem Antriebswerkzeug (104) ausgebildet ist,
**gekennzeichnet durch**
eine Fixierhülse (124) zum Fixieren des Bits (102) an der Aufnahmeeinrichtung (106);
wobei der Bithalter (100) darüber hinaus eine Stoßlastschutzeinrichtung (110) aufweist, die zum Schützen der Fixierhülse (124) vor einer auf die Fixierhülse (124) einwirkenden Stoßlast beim Anstoßen des Bithalters (100) an einen Verankerungsgrund (112) ausgebildet ist, wenn ein mittels des Bits (102), des Antriebswerkzeugs (104) und des Bithalters (100) anzutreibendes Befestigungselement (114) in den Verankerungsgrund (112) eingebracht wird, insbesondere drehend eingebracht wird.

2. Bithalter (100) gemäß Anspruch 1, wobei die Stoßlastschutzeinrichtung (110) eine dem Verankerungsgrund (112) zugewandte Schrägfläche (116) aufweist, insbesondere ausgebildet als ringförmige Schrägfläche (116);
insbesondere wobei die Stoßlastschutzeinrichtung (110) eine gegenüber der Schrägfläche (116) in einer Einbringrichtung (119) vorderseitig angeordnete und senkrecht zu der Einbringrichtung (119) orientierte Stirnfläche (118) aufweist, insbesondere ausgebildet als ringförmige Stirnfläche (118);
insbesondere aufweisend eines der folgenden Merkmale:
wobei die ringförmige Stirnfläche (118) der Stoßlastschutzeinrichtung (110) ein axiales Ende des Bithalters (100) bildet;
wobei eine Bithülse (126) des Bithalters (100) gegenüber der ringförmigen Stirnfläche (118) der Stoßlastschutzeinrichtung (110) in der Einbringrichtung (119) hervorsteht, um dadurch einen hohlzylindrischen Ringstutzen (120) zu bilden, der an einer Stufe (122) in die ringförmige Stirnfläche (118) übergeht;
insbesondere wobei ein Winkel (β) zwischen der Schrägfläche (116) und einer Zentralachse (117) des Bithalters (100) von einem rechten Winkel um höchstens 30° abweicht, insbesondere um höchstens 20° abweicht, weiter insbesondere um höchstens 10° abweicht.

3. Bithalter (100) gemäß einem der Ansprüche 1 bis 2, aufweisend zumindest eines der folgenden Merkmale:
wobei die Stoßlastschutzeinrichtung (110) einen dem Verankerungsgrund (112) zugewandten kegelstumpfförmigen Ringkörperabschnitt aufweist;
wobei die Stoßlastschutzeinrichtung (110) an dem Bithalter (100) auswechselbar angebracht ist, insbesondere aufschraubbar angebracht ist;
wobei die Stoßlastschutzeinrichtung (110) mit einer Bithülse (126) des Bithalters (100) einstückig ausgebildet ist, insbesondere an der Bithülse (126) verschweißt und/oder vernietet ist;
wobei die Stoßlastschutzeinrichtung (110) sich im an der Aufnahmeeinrichtung (106) aufgenommenen Zustand des Bits (102) umfänglich geschlossen um das Bit (102) herum erstreckt;
wobei die Stoßlastschutzeinrichtung (110) aus einem nicht-magnetischen Material hergestellt ist;
wobei die Aufnahmeeinrichtung (106) einen Innensechskant (128) aufweist;
wobei die Werkzeugkupplung (108) einen Außensechskant (130) aufweist;
wobei die Stoßlastschutzeinrichtung (110) entlang eines gesamten Umfangs des Bithalters (100) radial über den Rest des Bithalters (100) hinaussteht.

4. Bithalter (100) gemäß einem der vorherigen Ansprüche, aufweisend zumindest eines der folgenden Merkmale:
wobei die Fixierhülse (124) ausgebildet ist, mittels Verschiebens der Fixierhülse (124) ein an der Aufnahmeeinrichtung (106) aufgenommenes Bit (102) selektiv zu fixieren oder zu lösen;
wobei die Stoßlastschutzeinrichtung (110) zum Aufnehmen einer ohne die Stoßlastschutzeinrichtung (110) beim Anstoßen an einen Verankerungsgrund (112) auf die Fixierhülse (124) des Bithalters (100) einwirkende Stoßbewegung ausgebildet ist.

5. Bithalter (100) gemäß einem der vorherigen Ansprüche, wobei der Bithalter (100) eine, insbesondere die Aufnahmeeinrichtung (106) aufweisende, Bithülse (126) aufweist, über der die Fixierhülse (124) montiert ist.

6. Bithalter (100) gemäß Anspruch 5, aufweisend zumindest eines der folgenden Merkmale:
wobei die Bithülse (126) ein Außengewinde (138) aufweist, auf dem ein Innengewinde (140) der Stoßlastschutzeinrichtung (110) aufschraubbar oder aufgeschraubt ist;
wobei die Fixierhülse (124) antriebswerkzeugseitig und die Stoßlastschutzeinrichtung (110) bitseitig über der Bithülse (126) montiert sind;
wobei sich die Fixierhülse (124) in axialer Richtung entlang maximal 50%, insbesondere entlang maximal 40%, einer Axialerstreckung (L) der Bithülse (126) erstreckt;
wobei sich die Stoßlastschutzeinrichtung (110) in axialer Richtung entlang maximal 30%, insbesondere entlang maximal 20%, einer Axialerstreckung (L) der Bithülse (126) erstreckt.

7. Anordnung (150) zum Einbringen eines Befestigungselements (114) in einen Verankerungsgrund (112), wobei die Anordnung (150) aufweist:
einen Bithalter (100) gemäß einen der Ansprüche 1 bis 6 zum Halten eines Bits (102) zum Kuppeln des Bits (102) mit einem Antriebswerkzeug (104); und
das Bit (102), das an der Aufnahmeeinrichtung (106) des Bithalters (100) aufgenommen oder aufnehmbar ist.

8. Anordnung (150) gemäß Anspruch 7, aufweisend das Antriebswerkzeug (104), das mit der Werkzeugkupplung (108) des Bithalters (100) gekuppelt oder kuppelbar ist.

9. Anordnung (150) gemäß Anspruch 8, wobei das Antriebswerkzeug (104) aus einer Gruppe ausgewählt ist, die besteht aus einem Akkuschrauber, einem Akku-Bohrschrauber, einem Drehschrauber, einem Impulsschrauber, einem Ratschenschrauber, einer Bohrmaschine, einem Schlagschrauber, einem Hammerbohrer, einem drehbaren Handgriff, einem Schraubendrehergriff, einem abgewinkelten Griff, einer Ratsche und einem Drehmomentschlüssel.

10. Anordnung (150) gemäß einem der Ansprüche 7 bis 9, aufweisend das Befestigungselement (114), das mittels des Bits (102) antreibbar ist.

11. Anordnung (150) gemäß Anspruch 10, aufweisend zumindest eines der folgenden Merkmale:
wobei das Befestigungselement (114) eine Holzschraube ist;
wobei ein Außendurchmesser (D) der Stoßlastschutzeinrichtung (110) größer als ein maximaler Außendurchmesser (d) des Befestigungselements (114) ist, insbesondere größer als ein maximaler Außendurchmesser (d) eines Kopfes (134) des Befestigungselements (114) ist.

12. Anordnung (150) gemäß einem der Ansprüche 7 bis 11, aufweisend den Verankerungsgrund (112), insbesondere einen Verankerungsgrund (112) aus Holz, in den das Befestigungselement (114) eingebracht oder einbringbar ist.

13. Verfahren zum Einbringen eines Befestigungselements (114) in einen Verankerungsgrund (112) mittels eines Bits (102) und eines Antriebswerkzeugs (104), wobei das Verfahren aufweist:
Aufnehmen des Bits (102) an einer Aufnahmeeinrichtung (106) eines Bithalters (100);
Fixieren des Bits (102) an der Aufnahmeeinrichtung (106) mittels einer Fixierhülse (124) des Bithalters (100);
Kuppeln einer Werkzeugkupplung (108) des Bithalters (100) mit dem Antriebswerkzeug (104);
Einbringen, insbesondere drehendes Einbringen, des Befestigungselements (114) in den Verankerungsgrund (112) durch Aufbringen einer auf das Befestigungselement (114) einwirkenden Einbringkraft mittels des Bits (102), des Antriebswerkzeugs (104) und des Bithalters (100); und
Versehen des Bithalters (100) mit einer Stoßlastschutzeinrichtung (110) zum Schützen der Fixierhülse (124) vor einer auf die Fixierhülse (124) einwirkenden Stoßlast beim Anstoßen des Bithalters (100) an den Verankerungsgrund (112) bei dem Einbringen.

14. Verfahren gemäß Anspruch 13, aufweisend zumindest eines der folgenden Merkmale:
wobei das Verfahren ein Einbringen des Befestigungselements (114) in einen Holz aufweisenden Verankerungsgrund (112) aufweist;
wobei das Verfahren ein Einbringen des Befestigungselements (114) in den Verankerungsgrund (112) derart aufweist, dass ein mittels des Bits (102) angetriebener Kopf (134) des Befestigungselements (114) sich im eingebrachten Zustand über eine Außenfläche des Verankerungsgrunds (112) hinausgehend tiefer in den Verankerungsgrund (112) hinein erstreckt.

## Claims

1. A bit holder (100) for holding a bit (102) for coupling the bit (102) to a drive tool (104), the bit holder (100) comprising:
a receiving device (106) which is designed to receive the bit (102); and
a tool coupling (108), which is designed for coupling with the drive tool (104),
**characterized by**
a fixing sleeve (124) for fixing the bit (102) to the receiving device (106);
the bit holder (100) furthermore having an impact load protection device (110) which is designed to protect the fixing sleeve (124) from an impact load acting on the fixing sleeve (124) when the bit holder (100) abuts against an anchoring base (112), when a fastening element (114) to be driven by means of the bit (102), the drive tool (104) and the bit holder (100) is introduced into the anchoring base (112), in particular is introduced in a rotating manner.

2. The bit holder (100) according to claim 1, wherein the impact load protection device (110) has an inclined surface (116) facing the anchoring base (112), in particular formed as an annular inclined surface (116);
in particular wherein the impact load protection device (110) has an end face (118) arranged in front of the inclined face (116) in an insertion direction (119) and oriented perpendicular to the insertion direction (119), in particular designed as an annular end face (118);
in particular having one of the following features:
wherein the annular end face (118) of the impact load protection device (110) forms an axial end of the bit holder (100);
wherein a bit sleeve (126) of the bit holder (100) protrudes in the insertion direction (119) relative to the annular end face (118) of the impact load protection device (110), thereby forming a hollow cylindrical annular socket (120) which merges into the annular end face (118) at a step (122);
in particular wherein an angle (β) between the inclined surface (116) and a central axis (117) of the bit holder (100) deviates from a right angle by at most 30°, in particular deviates by at most 20°, further in particular deviates by at most 10°.

3. The bit holder (100) according to one of claims 1 to 2, comprising at least one of the following features:
wherein the impact load protection device (110) comprises a frustoconical annular body portion facing the anchoring base (112);
wherein the impact load protection device (110) is attached to the bit holder (100) in a replaceable manner, in particular is attached in a screw-on manner;
wherein the impact load protection device (110) is integrally formed with a bit sleeve (126) of the bit holder (100), in particular is welded and/or riveted to the bit sleeve (126);
wherein the impact load protection device (110) extends circumferentially closed around the bit (102) when the bit (102) is held on the receiving device (106);
wherein the impact load protection device (110) is made of a nonmagnetic material;
wherein the receiving means (106) comprises an internal hexagon (128);
wherein the tool coupling (108) has an external hexagon (130);
wherein the impact load protection device (110) protrudes radially beyond the rest of the bit holder (100) along an entire circumference of the bit holder (100).

4. The bit holder (100) according to any of the preceding claims, comprising at least one of the following features:
wherein the fixing sleeve (124) is configured to selectively fix or release a bit (102) received on the receiving means (106) by means of displacement of the fixing sleeve (124);
wherein the impact load protection device (110), when it strikes an anchoring base (112), is designed to absorb an impact movement, which would act on the fixing sleeve (124) of the bit holder (100) without the impact load protection device (110).

5. The bit holder (100) according to one of the preceding claims, wherein the bit holder (100) has a bit sleeve (126), in particular having the receiving device (106), over which the fixing sleeve (124) is mounted.

6. The bit holder (100) according to claim 5, having at least one of the following features:
wherein the bit sleeve (126) has an external thread (138) onto which an internal thread (140) of the impact load protection device (110) can be screwed or is screwed;
wherein the fixing sleeve (124) is mounted on the drive tool side and the impact load protection device (110) is mounted on the bit side above the bit sleeve (126);
wherein the fixing sleeve (124) extends in the axial direction along a maximum of 50%, in particular along a maximum of 40%, of an axial extension (L) of the bit sleeve (126);
wherein the impact load protection device (110) extends in the axial direction along a maximum of 30%, in particular along a maximum of 20%, of an axial extension (L) of the bit sleeve (126).

7. An arrangement (150) for inserting a fastening element (114) into an anchoring base (112), the arrangement (150) comprising:
a bit holder (100) according to any one of claims 1 to 6 for holding a bit (102) for coupling the bit (102) to a drive tool (104); and
the bit (102) being received or receivable on the receiving means (106) of the bit holder (100).

8. The arrangement (150) according to claim 7, comprising the drive tool (104) coupled or couplable to the tool coupling (108) of the bit holder (100).

9. The arrangement (150) according to claim 8, wherein the drive tool (104) is selected from a group consisting of a cordless screwdriver, a cordless drill driver, a rotary screwdriver, a pulse screwdriver, a ratchet screwdriver, a drill, an impact driver, a hammer drill, a rotatable handle, a screwdriver handle, an angled handle, a ratchet and a torque wrench.

10. The arrangement (150) according to any one of claims 7 to 9, comprising the fastening element (114) drivable by means of the bit (102).

11. The arrangement (150) according to claim 10, comprising at least one of the following features:
wherein the fastening element (114) is a wood screw;
wherein an outer diameter (D) of the impact load protection device (110) is larger than a maximum outer diameter (d) of the fastening element (114), in particular larger than a maximum outer diameter (d) of a head (134) of the fastening element (114).

12. The arrangement (150) according to one of claims 7 to 11, comprising the anchoring base (112), in particular an anchoring base (112) made of wood, into which the fastening element (114) is inserted or can be inserted.

13. A method for inserting a fastening element (114) into an anchoring base (112) by means of a bit (102) and a drive tool (104), wherein the method comprises:
receiving the bit (102) at a receiving device (106) of a bit holder (100);
fixing the bit (102) to the receiving device (106) by means of a fixing sleeve (124) of the bit holder (100);
coupling a tool coupling (108) of the bit holder (100) to the drive tool (104);
inserting, in particular rotationally inserting, the fastening element (114) into the anchoring base (112) by applying an insertion force acting on the fastening element (114) by means of the bit (102), the drive tool (104) and the bit holder (100); and
providing the bit holder (100) with an impact load protection device (110) for protecting the fixing sleeve (124) from an impact load acting on the fixing sleeve (124) when the bit holder (100) abuts against the anchoring base (112) during insertion.

14. The method according to claim 13, comprising at least one of the following features:
wherein the method comprises inserting the fastening element (114) into an anchoring base (112) comprising wood;
wherein the method comprises inserting the fastening element (114) into the anchoring base (112) such that a head (134) of the fastening element (114) driven by the bit (102) extends deeper into the anchoring base (112) beyond an outer surface of the anchoring base (112) in the inserted state.

## Revendications

1. Porte-embout (100) permettant de retenir un embout (102) afin de coupler ledit embout (102) à un outil d'entraînement (104), dans lequel le porte-embout (100) comprend :
un dispositif d'accueil (106) conçu pour accueillir l'embout (102) ; et
un couplage d'outil (108) conçu pour être couplé à l'outil d'entraînement (104),
**caractérisé par**
un manchon d'immobilisation (124) permettant d'immobiliser l'embout (102) au niveau du dispositif d'accueil (106) ;
dans lequel le porte-embout (100) présente en outre un dispositif de protection contre les chocs (110) qui est conçu pour protéger le manchon d'immobilisation (124) contre une charge d'impact s'exerçant sur le manchon d'immobilisation (124) au moment de la butée du porte-embout (100) contre un fond d'ancrage (112) lorsqu'un élément de fixation (114) à entraîner au moyen de l'embout (102), de l'outil d'entraînement (104) et du porte-embout (100) est mis en place, en particulier par rotation, dans le fond d'ancrage (112).

2. Porte-embout (100) selon la revendication 1, dans lequel le dispositif de protection contre les chocs (110) présente une surface inclinée (116) tournée vers le fond d'ancrage (112), en particulier réalisée sous la forme d'une surface inclinée annulaire (116) ;
en particulier dans lequel le dispositif de protection contre les chocs (110) présente une surface frontale (118) agencée à l'avant par rapport à la surface inclinée (116) dans une direction d'introduction (119) et orientée perpendiculairement à la direction d'introduction (119), en particulier réalisée sous la forme d'une surface frontale annulaire (118) ;
présentant en particulier une des caractéristiques ci-dessous :
la surface frontale annulaire (118) du dispositif de protection contre les chocs (110) forme une extrémité axiale du porte-embout (100) ;
un manchon d'embout (126) du porte-embout (100) fait saillie par rapport à la surface frontale annulaire (118) du dispositif de protection contre les chocs (110) dans la direction d'introduction (119), formant ainsi une tubulure annulaire cylindrique creuse (120) qui se prolonge dans la surface frontale annulaire (118) par une marche (122) ;
un angle (β) entre la surface inclinée (116) et un axe central (117) du porte-embout (100) s'écarte en particulier d'un angle droit à raison d'au plus 30°, s'en écarte en particulier d'au plus 20°, et en outre s'en écarte en particulier d'au plus 10°.

3. Porte-embout selon l'une quelconque des revendications 1 à 2, présentant au moins une des caractéristiques ci-dessous :
le dispositif de protection contre les chocs (110) présente une section de corps annulaire tronconique tournée vers le fond d'ancrage (112) ;
le dispositif de protection contre les chocs (110) est monté de manière interchangeable sur le porte-embout (100), en particulier de manière à pouvoir être vissé ;
dans lequel le dispositif de protection contre les chocs (110) est réalisé d'un seul tenant avec un manchon d'embout (126) du porte-embout (100), en particulier est soudé et/ou riveté sur le manchon d'embout (126) ;
le dispositif de protection contre les chocs (110) s'étend autour de l'embout (102) de manière fermée sur la circonférence lorsque l'embout (102) est accueilli au niveau du dispositif d'accueil (106) ;
le dispositif de protection contre les chocs (110) est fabriqué à partir d'un matériau non magnétique ;
le dispositif d'accueil (106) présente une empreinte à six pans creux (128) ;
l'outil de couplage (108) présente une tête à six pans (130) ;
le dispositif de protection contre les chocs (110) dépasse radialement du reste du porte-embout (100) sur toute la circonférence du porte-embout (100).

4. Porte-embout selon l'une quelconque des revendications précédentes, présentant au moins une des caractéristiques ci-dessous :
le manchon d'immobilisation (124) est conçu pour immobiliser ou desserrer de manière sélective un embout (102) accueilli au niveau du dispositif d'accueil (106) au moyen d'un déplacement du manchon d'immobilisation (124) ;
le dispositif de protection contre les chocs (110) est conçu pour recevoir un mouvement de choc s'exerçant sans le dispositif de protection contre les chocs (110) sur le manchon d'immobilisation (124) du porte-embout (100) lors de la butée contre un fond d'ancrage (112).

5. Porte-embout (100) selon l'une quelconque des revendications précédentes, dans lequel le porte-embout (100) présente un manchon d'embout (126) présentant en particulier le dispositif d'accueil (106) et par l'intermédiaire duquel le manchon d'immobilisation (124) est monté.

6. Porte-embout (100) selon la revendication 5, présentant au moins une des caractéristiques ci-dessous :
le manchon d'embout (126) présente un filetage extérieur (138) sur lequel peut être vissé ou est vissé un filetage intérieur (140) du dispositif de protection contre les chocs (110) ;
grâce au manchon d'embout (126), le manchon d'immobilisation (124) est monté du côté de l'outil d'entraînement et le dispositif de protection contre les chocs (110) est monté du côté de l'embout ;
le manchon d'immobilisation (124) s'étend dans la direction axiale sur au plus 50 %, en particulier sur au plus 40 %, d'une extension axiale (L) du manchon d'embout (126) ;
le dispositif de protection contre les chocs (110) s'étend dans la direction axiale sur au plus 30 %, en particulier sur au plus 20 %, d'une extension axiale (L) du manchon d'embout (126).

7. Agencement (150) permettant la mise en place d'un élément de fixation (114) dans un fond d'ancrage (112), dans lequel l'agencement (150) présente :
un porte-embout (100) selon l'une quelconque des revendications 1 bis 6 permettant de retenir un embout (102) afin de coupler ledit embout (102) à un outil de couplage (104) ; et
l'embout (102), qui est accueilli ou peut être accueilli au niveau du dispositif d'accueil (106) du porte-embout (100).

8. Agencement (150) selon la revendication 7, présentant l'outil d'entraînement (104) couplé ou pouvant être couplé au couplage d'outil (108) du porte-embout (100).

9. Agencement (150) selon la revendication 8, dans lequel l'outil d'entraînement (104) est choisi dans le groupe constitué d'une visseuse sans fil, d'une perceuse-visseuse sans fil, d'une visseuse manuelle, d'une visseuse à impulsions, d'une visseuse à cliquet, d'une perceuse, d'une visseuse à percussion, d'une perceuse à percussion, d'une poignée rotative, d'une poignée de tournevis, d'une poignée coudée, d'un cliquet et d'une clé dynamométrique.

10. Agencement (150) selon l'une quelconque des revendications 7 à 9, présentant l'élément de fixation (114) pouvant être entraîné au moyen de l'embout (102).

11. Agencement (150) selon la revendication 10, présentant au moins une des caractéristiques ci-dessous :
l'élément de fixation (114) est une vis à bois ;
un diamètre extérieur (D) du dispositif de protection contre les chocs (110) est supérieur à un diamètre extérieur maximal (d) de l'élément de fixation (114), en particulier est supérieur à un diamètre extérieur maximal (d) d'une tête (134) de l'élément de fixation (114).

12. Agencement (150) selon l'une quelconque des revendications 7 à 11, présentant le fond d'ancrage (112), en particulier un fond d'ancrage (112) en bois, au sein duquel l'élément de fixation (114) est mis en place ou peut être mis en place.

13. Procédé de mise en place d'un élément de fixation (114) dans un fond d'ancrage (112) au moyen d'un embout (102) et d'un outil d'entraînement (104), dans lequel le procédé comprend les étapes consistant à :
accueillir l'embout (102) au niveau d'un dispositif d'accueil (106) d'un porte-embout (100) ;
immobiliser l'embout (102) au niveau du dispositif d'accueil (106) au moyen d'un manchon d'immobilisation (124) du porte-embout (100) ;
coupler un couplage d'outil (108) du porte-embout (100) à l'outil d'entraînement (104) ;
mettre en place, en particulier mettre en place par rotation, l'élément de fixation (114) dans le fond d'ancrage (112) par application d'une force de mise en place s'exerçant sur l'élément de fixation (114) au moyen de l'embout (102), de l'outil d'entraînement (104) et du porte-embout (100) ; et
munir le porte-embout (100) d'un dispositif de protection contre les chocs (110) afin de protéger le manchon d'immobilisation (124) contre une charge d'impact s'exerçant sur le manchon d'immobilisation (124) lorsque le porte-embout (100) bute contre le fond d'ancrage (112) à l'occasion de la mise en place.

14. Procédé selon la revendication 13, présentant au moins une des caractéristiques ci-dessous :
le procédé comprend la mise en place de l'élément de fixation (114) dans un fond d'ancrage (112) présentant du bois ;
le procédé comprend la mise en place de l'élément de fixation (114) dans le fond d'ancrage (112) de telle manière qu'une tête (134) de l'élément de fixation (114) entraînée au moyen de l'embout (102) s'étend plus profondément dans le fond d'ancrage (112) au-delà d'une surface extérieure du fond d'ancrage (112) lorsqu'elle est en place.
